# EUROPÄISCHE PATENTANMELDUNG

(11) **EP 2 172 300 A1**
(43) Veröffentlichungstag der Anmeldung: **07.04.2010**
(21) Anmeldenummer: 09170538.4
(22) Anmeldetag: 17.09.2009
(51) Int. Cl.: B23P 15/24, B29C 33/04, B29C 33/38, B29C 45/73, B29C 45/26

(54) **Verfahren zur Herstellung eines Werkzeugs für eine Spritzgießmaschine sowie Werkzeughalbfabrikat, Werkzeug und dessen Verwendung in einer Spritzgießmaschine**

(30) Priorität: 01.10.2008 DE 102008049827; 18.12.2008 DE 102008063569
(71) Anmelder: GIRA Giersiepen GmbH & Co. KG, 42477 Radevormwald (DE)
(72) Erfinder: Berker, Oliver, 58579 Schalksmühle (DE); Stein, Rainer, 42859 Remscheid (DE); Lausberg, Klaus, 58579 Schalksmühle (DE); Fröhling, Marcel, 58579 Schalksmühle (DE)
(74) Vertreter: Patentanwälte Dr. Solf & Zapf

(57) **Zusammenfassung**

Die Erfindung betrifft ein Verfahren zur Herstellung eines Werkzeugs (100) für eine Spritzgießmaschine zur Fertigung von vorzugsweise aus thermoplastischem Kunststoff bestehenden Formteilen, wobei das Werkzeug (100) zwei zueinander komplementäre, relativ zueinander bewegliche Werkzeughälften (200, 300) aufweist, in denen in mindestens einem Formhohlraum (400) jeweils das Formteil ausgebildet wird, wobei eine Temperierung des Formteils mittels eines Fluids erfolgt, welches in den Werkzeughälften (200, 300) verlaufende Kanäle (210, 310) durchströmt. Um bei der Fertigung von Formteilen zu erreichen, dass ein - auch in kleineren Losgrößen - gefertigtes, insbesondere aus einem thermoplastischen Werkstoff hergestelltes Formteil in hoher Qualität, aber mit geringerem Herstellungsaufwand produzierbar ist, wird vorgeschlagen, dass zur Fertigung der Werkzeughälften (200, 300) jeweils ein Werkzeughalbfabrikat (250, 350) eingesetzt wird, welches aus einem Werkzeugrohling (260, 360) besteht, in den die Kanäle (210, 310) in einer vordefinierten Orientierung entsprechend einer gemeinsamen geometrischen Grundgestalt der Formteile und/oder ein vordefinierter Formbereich (270, 370) für eine Grundkavität eingebracht werden, die einer gemeinsamen geometrischen Grundgestalt der Formteile entspricht. Es werden auch ein Werkzeughalbfabrikat, Werkzeug und eine Spritzgießmaschine beansprucht.

## Beschreibung

Die vorliegende Erfindung betrifft ein Verfahren zur Herstellung eines Werkzeugs für eine Spritzgießmaschine zur Fertigung von insbesondere aus thermoplastischem Kunststoff bestehenden Formteilen, wobei das Werkzeug zwei zueinander komplementäre, relativ zueinander bewegliche Werkzeughälften aufweist, in denen in mindestens einem Formhohlraum jeweils das Formteil ausgebildet wird, wobei eine Temperierung des Formteils mittels eines Fluids erfolgt, welches in den Werkzeughälften verlaufende Kanäle durchströmt. Des Weiteren betrifft die vorliegende Erfindung ein Werkzeughalbfabrikat, ein Werkzeug und dessen Verwendung in einer Spritzgießmaschine.

Das Spritzgießen von Kunststoffen stellt eines der wichtigsten Verfahren zur Herstellung von Formteilen dar, weil auf Spritzgießmaschinen in großer Stückzahl Teile von unterschiedlichster Größe und Form hergestellt werden können. So wird ein überwiegend hoher Prozentsatz aller Kunststoffverarbeitungsmaschinen durch Spritzgießmaschinen gebildet, welche in verschiedenen Bauformen, beispielsweise als Schneckenspritzgießmaschinen, Kolbenspritzgießmaschinen, oder Schneckenkolbenspritzgießmaschinen seit langem bekannt sind.

Das Spritzgießen eignet sich dabei deshalb insbesondere zur Herstellung von Massenprodukten, weil der Rohstoff schon in einem Arbeitsgang in ein Fertigteil umgewandelt werden kann. Die Nacharbeit ist gering bzw. kann ganz entfallen. Auch lassen sich Zusätze vielfältiger Art, wie beispielsweise Glasfasern, Farbpigmente oder andere Füllstoffe, in das Formteil einarbeiten, wodurch die Eigenschaften des Produkts gezielt modifiziert werden können.

Zur Herstellung von insbesondere aus thermoplastischem Kunststoff bestehenden Formteilen werden bekanntermaßen in großem Umfang Spritzgießmaschinen eingesetzt, die als funktionswichtige Teile insbesondere eine Schließeinheit und ein Werkzeug umfassen, welches zwei relativ durch die Schließeinheit zueinander bewegliche Werkzeughälften aufweist, in denen in Formhohlräumen das Formteil ausgebildet wird, wobei eine Wärmeabfuhr durch Kühlkanäle oder ggf. auch eine Wärmezufuhr durch Heizkanäle erfolgt.

Verfahren der eingangs genannten Art zur Herstellung von Spritzgießwerkzeugen mit Temperierkanälen sind dabei aus der DE 36 32 640 A1 und der DE 10 2006 017 808 A1 bekannt. Diese bekannten Verfahren beziehen sich speziell auf die Art und Weise, wie die Kanäle gebildet werden.

Der insgesamt komplexere Grundaufbau einer Spritzgießmaschine umfasst dabei bekanntermaßen in der Regel zumindest eine Spritz- und Plastifiziereinheit, die Schließeinheit, das Werkzeug und eine Steuerung.

In der Spritz- und Plastifiziereinheit, die jedoch nicht Gegenstand der Erfindung ist, wird beispielsweise in einer konkreten Ausbildung als Schneckenspritzgießmaschine ein als Granulat vorliegender thermoplastischer Kunststoff durch Wärmezufuhr mit Hilfe von Heizbändern plastifiziert, durch die Drehbewegung einer Schnecke gefördert und dann durch eine Düse in das Werkzeug gespritzt. Die Formmasse gelangt dabei über mindestens einen sogenannten Angusskanal und einen Übergangsraum, der als Anschnitt bezeichnet wird, in den - üblicherweise auch Kavität genannten - Formhohlraum des Werkzeugs. Es sind Einfach- und Mehrfachwerkzeuge bekannt, je nachdem, ob das Werkzeug einen oder mehrere Formhohlräume - auch Formnester genannt - besitzt.

Das Spritzgießen ist ein diskontinuierlicher Prozess, dessen Ablauf von verschiedenen Einflussfaktoren abhängig ist, jedoch ein grundsätzliches Schema aufweist. Zu Beginn des Prozesses wird das Werkzeug mit Hilfe der Schließeinheit geschlossen. Da dabei die beiden Werkzeughälften zusammengeschoben werden, spricht man hier auch vom Zufahren. Dabei wird die Spritzeinheit an das Werkzeug herangefahren und dann wird die Formmasse, z. B. der plastifizierte Kunststoff, in das Werkzeug eingespritzt. Die Formmasse wird eine gewisse Zeit - unter Umständen unter Aufbringung eines zusätzlichen Drucks - im Werkzeug belassen. Die Schließeinheit muss dabei das geteilte Werkzeug gegen die Wirkung des Spritz- und ggf. des Nachdruckes zuhalten. Wenn das Formteil ausreichend abgekühlt ist, kann es entformt werden, wozu das Werkzeug durch die Schließeinheit wieder geöffnet wird. Zur besseren Entformung des Fertigteils enthält die Schließeinheit dabei meist als Hilfseinrichtung eine Auswerfereinheit.

Über die Steuerung werden alle relevanten Verarbeitungsparameter eingestellt. Gleichzeitig übernimmt sie die gesamte Prozessüberwachung während der im Automatikbetrieb stattfindenden Fertigung.

Das konkrete Werkzeug - obwohl obligatorisch notwendig - wird teilweise auch als nicht der Spritzgießmaschine zugehörig betrachtet, da es je nach dem angestrebten Fertigungsziel ausgetauscht werden kann. Das Werkzeug der eingangs genannten Art hat bei der Verarbeitung thermoplastischer Kunststoffe die Aufgabe, die einströmende Schmelze zu formen und zu kühlen, wobei eine Wärmeabfuhr durch die Kühlkanäle erfolgt. Im Falle der Verarbeitung von Elastomermischungen müssen diese im Formhohlraum vulkanisieren, so dass es hier notwendig werden kann, die Temperatur vorübergehend zu erhöhen, wozu dann entsprechende Heizkanäle dienen. In jedem Fall erfolgt eine Temperierung des Formteils mittels eines Fluids, z. B. Luft, Wasser oder Öl, welches in den Werkzeughälften verlaufende Kanäle durchströmt.

Diese Werkzeugkühlung ermöglicht bei der Verarbeitung thermoplastischer Kunststoffe einerseits kurze Spritzzyklen, andererseits sichert sie auch eine für eine hohe Formteilqualität notwendige, gleichmäßige Temperaturverteilung über die Oberfläche der Formhohlräume.

Der Fertigungsaufwand und damit die Kosten für ein Werkzeug, mit dem ein Formteil komplizierterer Form hergestellt werden soll, kann bzw. können sehr hoch sein. Es ist sogar möglich, dass die Fertigungskosten für das Werkzeug die Höhe der Investitionskosten der Spritzgießmaschine erreichen. Daraus leitet sich ab, dass je nach dem Preis des hergestellten Produktes - beispielsweise erst bei einer Stückzahl von mehreren Zehn- oft aber mehreren Hunderttausenden von Formteilen - eine Werkzeugamortisation eintritt. Der Fertigungsaufwand für das Werkzeug bedeutet daher insbesondere für geringere Stückzahlen, wie sie für Kleinserien charakteristisch sind, ein Problem. Zwar ist es, um diesem Problem abzuhelfen, grundsätzlich möglich, billigere, z. B. aus Aluminium bestehende, Werkzeuge einzusetzen, jedoch kann darunter die Produktqualität des Formteils leiden.

Der vorliegenden Erfindung liegt die Aufgabe zugrunde, ein Verfahren der eingangs genannten Art zur Herstellung eines Werkzeugs für eine Spritzgießmaschine derart auszugestalten, dass ein damit - auch in kleineren Losgrößen - gefertigtes, insbesondere aus einem thermoplastischen Werkstoff hergestelltes Formteil in hoher Qualität, aber mit geringerem Herstellungsaufwand produzierbar ist. Was den Herstellungsaufwand betrifft, so wird dieser im Hinblick auf diese Aufgabe unter verschiedenen Aspekten betrachtet, so insbesondere unter den Gesichtspunkten der Flexibiltät der Produktion und einer thermisch optimierten Prozessgestaltung, aber auch unter den Gesichtspunkten kurzer Maschinenrüst- und Zykluszeiten.

Erfindungsgemäß wird dies dadurch erreicht, dass zur Fertigung der Werkzeughälften jeweils ein Werkzeughalbfabrikat eingesetzt wird, welches aus einem Werkzeugrohling besteht, in den die Kanäle in einer vordefinierten Orientierung entsprechend einer gemeinsamen geometrischen Grundgestalt der Formteile und/oder ein vordefinierter Formbereich für eine Grundkavität eingebracht werden, die einer gemeinsamen geometrischen Grundgestalt der Formteile entspricht.

Ein erfindungsgemäßes Werkzeughalbfabrikat des erfindungsgemäßen Verfahrens besteht somit aus einem Werkzeugrohling, in den die Kanäle in einer vordefinierten Orientierung entsprechend der gemeinsamen geometrischen Grundgestalt der Formteile und/oder Formbereiche für eine vordefinierte Grundkavität eingebracht ist, die der gemeinsamen geometrischen Grundgestalt der Formteile entspricht.

Für einen grundsätzlich planbaren Bedarf an bestimmten Formteilen, wie z. B. für ein neues Programm elektrischer Schalter, welches unterschiedliche Formteilausführungen für seine Abdeckungen und andere Kunststoffteile umfasst, kann dabei durch Methoden des Computer Aided Design (CAD) die gemeinsame geometrische Grundgestalt ermittelt bzw. festgelegt werden.

Der Aufbau des Werkzeughalbfabrikates mit seinen vordefinierten Kanälen und/oder seiner vordefinierten Grundkavität kann dabei einerseits in einem CAD-System, beispielsweise in einem Speichermedium eines Computers, komplett hinterlegt werden und steht somit vorteilhafterweise für spätere Modifikationen jederzeit zur Verfügung.

Andererseits können Werkzeughalbfabrikate in beliebiger Stückzahl vorgefertigt werden, wobei zur Realisierung der Vorfertigung wahlweise größere Aufträge an Lieferanten - beispielsweise auch in anderen Ländern - vergeben oder nicht genutzte Kapazitäten im internen Werkzeugbau genutzt werden können. So kann einerseits der Fertigungsaufwand, und es können folglich auch die Kosten bedeutend gesenkt werden, die diesen Aufwand zum Ausdruck bringen.

Durch die Erfindung tritt eine Flexibilisierung der Werkzeugfertigung ein, da ein endgültiger Werkzeugherstellungsschritt sich ausgehend von den Werkzeughalbfabrikaten, die insbesondere mit vorgeformten, gehärteten Kavitäten ausgestattet und in die die Kühlbohrungen bereits eingebracht sind, auf die Einbringung von Detailformbereichen für die Kavitätsdetails beschränkt, die durch die Gestaltsabwandlungen, wie die Stege, Nasen, Abrundungen, Abplattungen, Nuten, Ausnehmungen oder dergleichen des Formteils, bedingt sind. Auch die oben erwähnten Angusskanäle und Anschnitte können in diesem abschließenden Fertigungschritt hergestellt werden.

Hierbei kann die Artikelgeometrie in kürzester Zeit aus dem "Vollen" gearbeitet werden, wodurch sich die Werkzeugerstellzeit deutlich verkürzt. Zur Bearbeitung der Halbfabrikate können - insbesondere in Verbindung mit dem CAD-hinterlegten Aufbau des Werkzeughalbfabrikates - Methoden des Computer Aided Manufacturing (CAM) bzw. Computer Integrated Manufacturing (CIM) eingesetzt werden. Der CAD-hinterlegte Aufbau des Werkzeugvorfabrikates wird dazu entsprechend dem konkret vorgesehenen Aufbau des Formteils mit allen seinen Modifikationen gegenüber der Grundgestalt aufbereitet und die Daten für die direkte Steuerung der Bearbeitungsmaschinen verwendet.

Erfindungsgemäß ist somit ein konstruktiv einfaches und fertigungsfreundliches Verfahren gegeben, mit dem, insbesondere bei Artikeln mit kleinem bis mittlerem Jahresbedarf, nicht nur die Werkzeugerstellzeit und die Werkzeugkosten gesenkt werden können, sondern in der Folge auch eine Reduzierung von Rüstzeit ermöglicht wird, da die Produktion optional schneller auf modifizierte Formteile umgestellt werden kann.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll im Folgenden die Erfindung näher erläutert werden. Dabei zeigen:
- Fig. 1: in einer perspektivischen Ansicht von unten, eine erste Werkzeughälfte eines auf erfindungsgemäße Weise hergestellten Werkzeugs für eine Spritzgießmaschine,
- Fig. 2: eine Unteransicht der in Fig. 1 dargestellten ersten Werkzeughälfte,
- Fig. 3: in einer perspektivischen Ansicht von unten, ein erfindungsgemäßes erstes Werkzeughalbfabrikat zur Herstellung der in Fig. 1 und 2 dargestellten ersten Werkzeughälfte,
- Fig. 4: eine Unteransicht des in Fig. 3 dargestellten ersten Werkzeughalbfabrikates,
- Fig. 5: in einer perspektivischen Ansicht von oben, eine zweite Werkzeughälfte eines auf erfindungsgemäße Weise hergestellten Werkzeugs für eine Spritzgießmaschine,
- Fig. 6: eine Draufsicht auf die in Fig. 5 dargestellte zweite Werkzeughälfte,
- Fig. 7: in einer perspektivischen Ansicht von oben, ein erfindungsgemäßes zweites Werkzeughalbfabrikat zur Herstellung der in Fig. 5 und 6 dargestellten zweiten Werkzeughälfte,
- Fig. 8: eine Draufsicht auf das in Fig. 7 dargestellte zweite Werkzeughalbfabrikat,
- Fig. 9: in einer perspektivischen Ansicht von oben eine Auswerferplatte eines erfindungsgemäßen Werkzeugs für eine Spritzgießmaschine,
- Fig. 10: eine Querschnittsansicht durch ein erfindungsgemäßes Werkzeug im Zusammenbau.

In den Figuren der Zeichnung sind gleiche bzw. einander entsprechende Teile stets mit denselben Bezugszeichen versehen, so dass sie in der Regel auch jeweils nur einmal beschrieben werden.

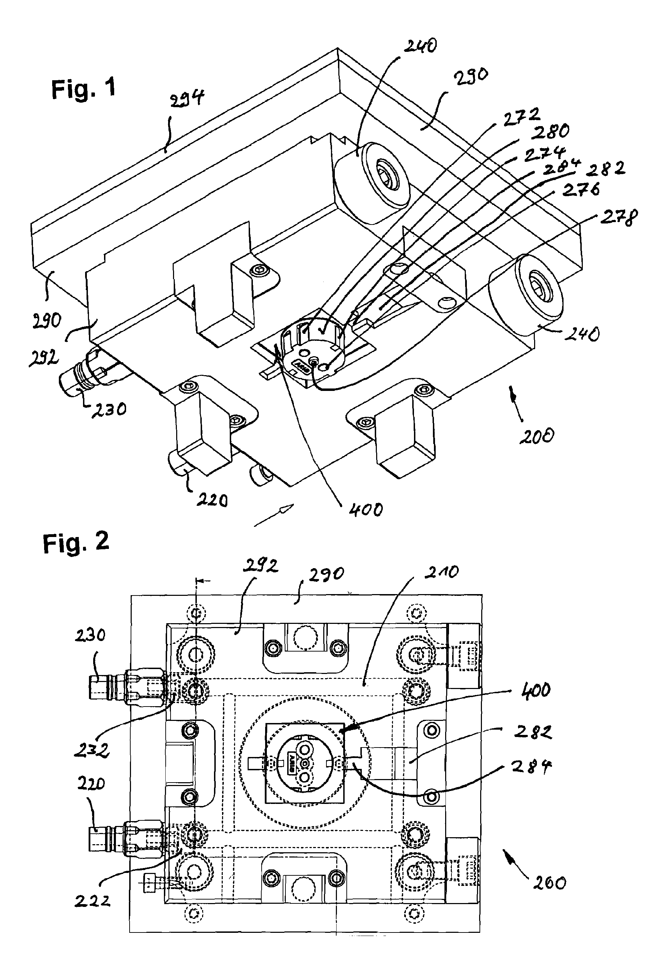

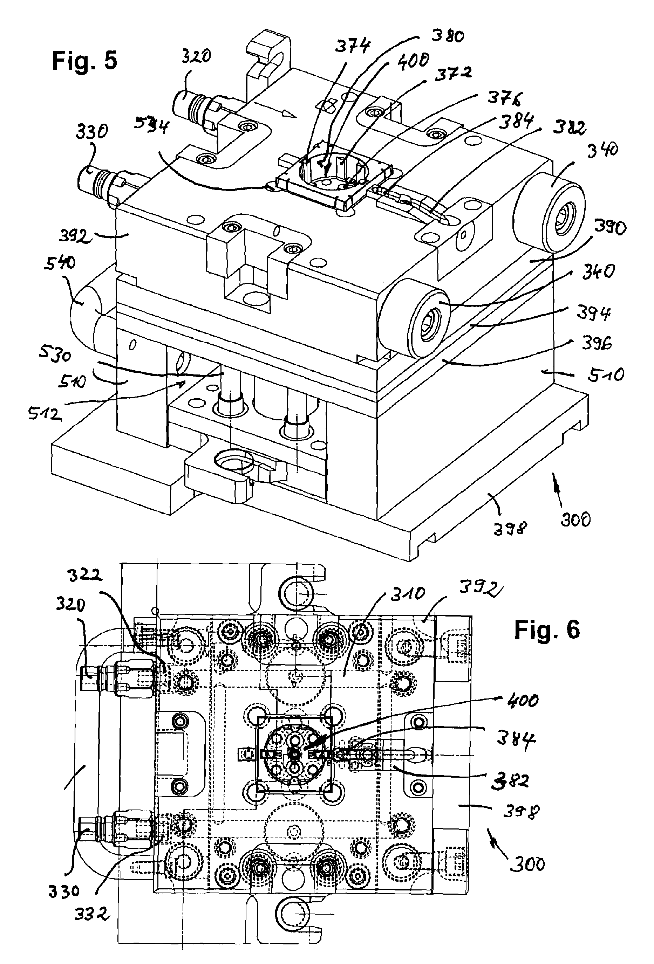

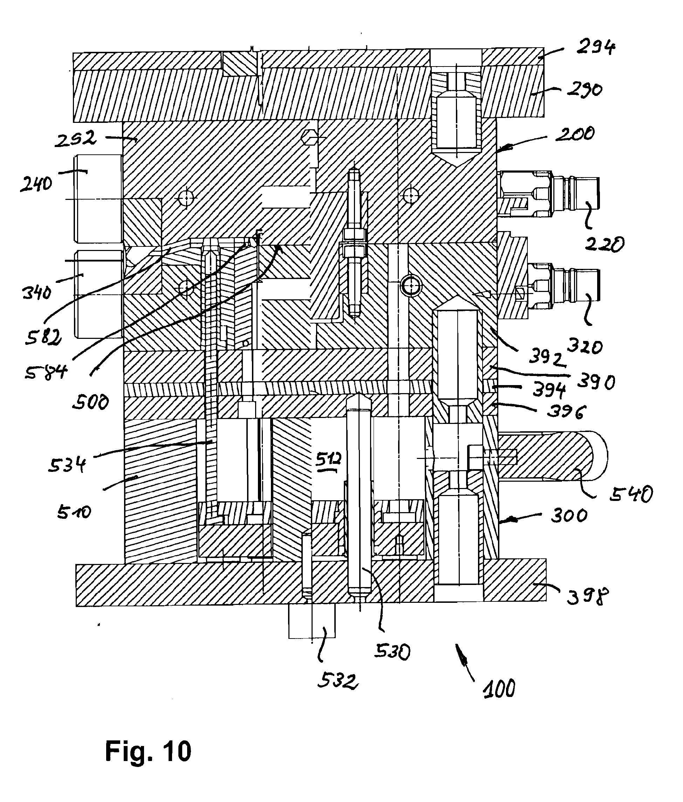

Das erfindungsgemäße Verfahren betrifft zunächst die Herstellung eines Werkzeugs 100 für eine Spritzgießmaschine, die wiederum selbst zur Fertigung von insbesondere aus thermoplastischem Kunststoff bestehenden Formteilen eingesetzt wird. Das Werkzeug 100, bei dem es sich, insofern es nach dem erfindungsgemäßen Verfahren hergestellt ist, um ein erfindungsgemäßes Werkzeug handelt, ist im Zusammenbau in Fig. 10 dargestellt. Es weist zwei zueinander komplementäre Werkzeughälften 200, 300 auf, von denen die erste, obere Werkzeughälfte 200 in Fig. 1 und 2 und die zweite, untere Werkzeughälfte 300 in Fig. 5 und 6 jeweils als Einzelteil dargestellt ist.

Durch die Werkzeughälften 200, 300 ist mindestens ein Formhohlraum - im dargestellten Fall genau ein Formhohlraum - ausgebildet, der in den Fig. 1, 2, 5 und 6 mit dem Bezugszeichen 400 bezeichnet ist. Im Formhohlraum 400 wird das nicht dargestellte Formteil ausgebildet, wozu - wie in Fig. 6 dargestellt - bei geschlossenem Werkzeug 100 eine aus einer Plastifizier- und Spritzeinheit kommende plastifizierte Kunststoffmasse über eine Düse in den Formhohlraum 400 eingespritzt wird und darin erstarrt. Plastifizier- und Spritzeinheit sowie die Düse sind nicht Bestandteil der Erfindung und daher nicht dargestellt.

Im Formhohlraum 400 erfolgt nach dem Einspritzen der Kunststoffmasse eine Temperierung des Formteils mittels eines Fluids, welches in den Werkzeughälften 200, 300 verlaufende Kanäle durchströmt. Diese Kanäle sind in Fig. 2 und 6 gezeigt und mit den Bezugszeichen 210 für die erste Werkzeughälfte 200 und 310 für die zweite Werkzeughälfte 300 bezeichnet. Konkret handelt es sich bei den Kanälen 210, 310 um Kühlkanäle, in denen als Fluid Wasser strömt. Die Kanäle 210 können bevorzugt als druckdichtes geschlossenes Kanalsystem ausgeführt sein. Auf diese Weise wird vorteilhafterweise vermieden, dass sich bei Temperaturen über 100 °C Dampf bildet.

Die Kühlung unterliegt der Forderung, eine möglichst gleichmäßige Temperaturverteilung über die Wandung des Formhohlraums 400 einzustellen. Das bedeutet, dass sich beim Wärmeübergang vom Formteil zum Kühlfluid an der Wandung des Formhohlraums 400 etwa Isothermen, also Linien gleicher Temperatur, oder zumindest nur um weniger als 5 K voneinander abweichender Temperatur, ausbilden sollten. Durch eine dieser Forderung angepasste thermische Auslegung des Werkzeugs 100 lässt sich eine hohe Formteilqualität bei kurzer Zykluszeit erreichen.

Zu diesem Zweck sind die Kanäle 210 möglichst nahe an die Wandung des Formhohlraums 400 und dicht nebeneinander zu legen. In Kantenbereichen des Formteils muss entsprechend den dort vorliegenden größeren Masseanhäufungen mehr Wärme abgeführt werden, was folglich auch eine stärkere Kühlung erfordert. Wenn die Kanäle 210, 310 als Bohrungen ausgeführt sind, sollte deren Durchmesser mindestens 8 mm, vorzugsweise 10 bis 12 mm, betragen.

Die Länge eines Kühlkreises sollte so bemessen werden, dass die beim Kühlen des Formteils auftretende Temperaturerhöhung zwischen einem Zulaufanschluss des Fluids, der in der Zeichnung mit dem Bezugszeichen 220 für die erste Werkzeughälfte 200 und mit dem Bezugszeichen 320 für die zweite Werkzeughälfte 300 bezeichnet ist, und einem Ablaufanschluss, der mit dem Bezugszeichen 230 für die erste Werkzeughälfte 200 und mit dem Bezugszeichen 330 für die zweite Werkzeughälfte 300 bezeichnet ist, maximal etwa 5 K, bei Präzisionsteilen maximal 1 K, beträgt. Bedarfsweise, insbesondere bei Formteilen mit bereichsweise auftretenden unterschiedlichen Wandstärken, können auch mehrere Kühlkreise gebildet sein.

Entsprechend dem erfindungsgemäßen Verfahren ist nun vorgesehen, dass zur Fertigung der Werkzeughälften 200, 300, die zur Formung unterschiedlicher Formteile dienen, welche eine Form mit gemeinsamer geometrischer Grundgestalt aufweisen, die durch Gestaltsabwandlungen modifiziert ist, jeweils ein einziges Werkzeughalbfabrikat 250, 350 eingesetzt wird, welches aus einem Werkzeugrohling 260, 360 besteht, in den die Kanäle 210, 310 in einer vordefinierten Orientierung entsprechend der gemeinsamen geometrischen Grundgestalt der Formteile eingebracht wird. "Vordefinierte Orientierung" bedeutet dabei, dass die Lage und der Verlauf der Kanäle 210, 310, einschließlich der Größendimensionierung, den vorstehend erläuterten Kriterien für eine optimale Kühlung entspricht. Insbesondere kann die Temperierung des Werkzeugs 100 dabei über eine Kaskadenkühlung erfolgen, die in die Werkzeughalbfabrikate 250, 350 eingebracht ist.

Alternativ oder zusätzlich kann auch ein vordefinierter Formbereich 270, 370 für eine Grundkavität in den Rohling 270, 370 eingebracht werden, die der gemeinsamen geometrischen Grundgestalt der Formteile entspricht.

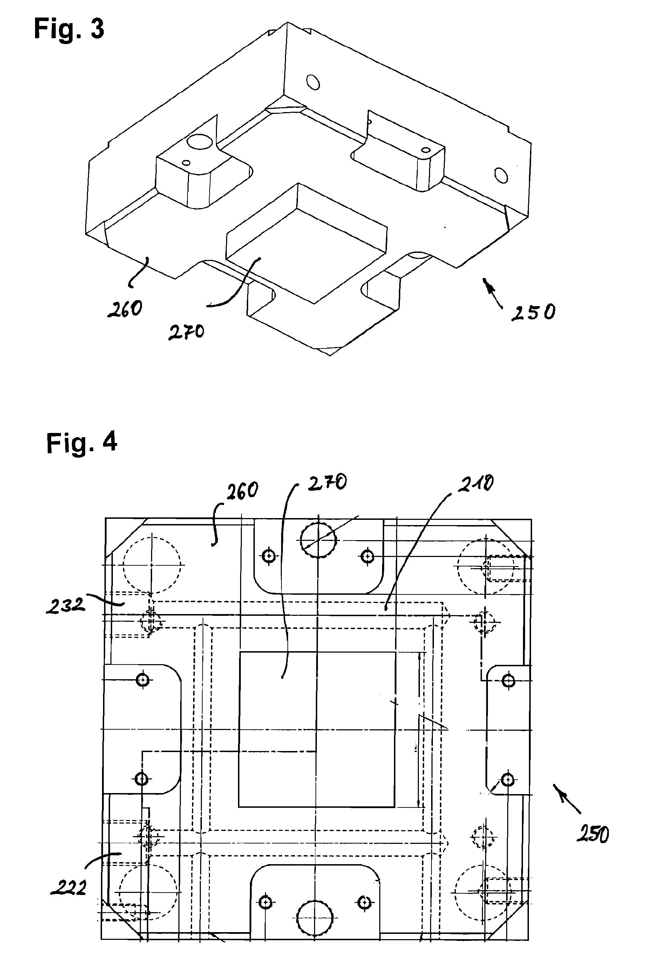

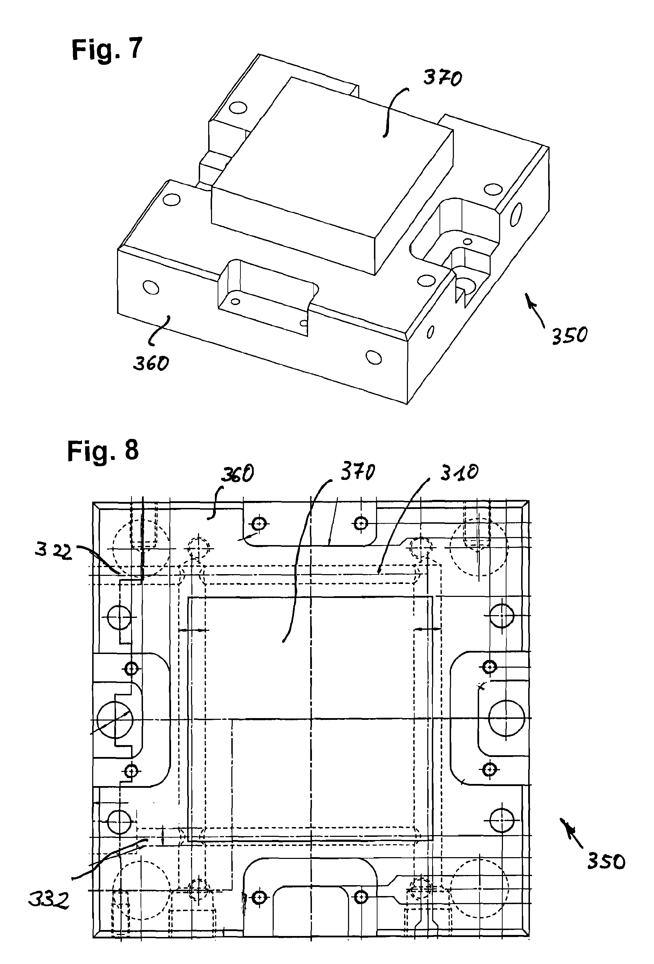

Die derartig erfindungsgemäß ausgebildeten Werkzeughalbfabrikate 250, 350 sind in Fig. 3 und 4 sowie 7 und 8 dargestellt. Der den Kanälen 210, 310 zugehörige jeweilige Zulaufbereich für das Fluid, in den der Zulaufanschluss 220, 320 eingesetzt wird, ist darin mit den Bezugszeichen 222 und 322 gekennzeichnet, und entsprechend der Ablaufbereich des Fluids mit den Bezugszeichen 232 und 332.

Die gemeinsame geometrische Grundgestalt der Formteile kann durch Methoden des Computer Aided Design (CAD) ermittelt werden. Dieser entsprechen beispielsweise im dargestellten Fall, bei der das herzustellende Formteil ein rechteckiger Zentraleinsatz für eine Unterputz-Steckdose ist, quader-, insbesondere plattenförmige, vordefinierte Formbereiche 270, 370 der Werkzeughalbfabrikate 250, 350. Bei einem runden Zentraleinsatz für eine Unterputz-Steckdose wären diese vordefinierten Formbereiche 270, 370 der Werkzeughalbfabrikate 250, 350 statt dessen zylinderförmig, und die Kühlkanäle 210, 310 würden kreisförmig verlaufen.

Die Werkzeughalbfabrikate 250, 350, die vorzugsweise aus gehärtetem und gegebenenfalls angelassenem Stahl bestehen können, können in beliebiger Stückzahl vorgefertigt und auf Lager gelegt werden.

Erst, wenn - beispielsweise operativ - eine Umstellung auf eine Produktion einer anderen, jedoch ähnlichen, Serie von Formteilen erfolgen soll, die nur im Hinblick auf Details ausgehend von der gemeinsamen geometrischen Grundgestalt in der Form anders modifiziert sind als die Formteile der aktuell produzierten Serie, erfolgt der abschließende Fertigungsschritt der Herstellung des erfindungsgemäßen Werkzeugs. Dadurch ist mit Vorteil die Fertigung einerseits sehr flexibel - z. B. ist eine äußerst schnelle Reaktion auf Kundenwünsche möglich -, andererseits wird der Fertigungsaufwand dabei aber minimalisiert.

In dem abschließenden Fertigungsschritt werden dabei Detailformbereiche für Kavitätsdetails, die den Gestaltsabwandlungen der gemeinsamen geometrischen Grundgestalt der Formteile entsprechen, in das jeweilige Werkzeughalbfabrikat 250, 350 eingebracht. Bei den Gestaltsabwandlungen kann es sich beispielsweis um am Formteil vorhandene Stege, Nasen, Abrundungen, Abplattungen, Nuten, Ausnehmungen oder dergleichen handeln. Exemplarisch sind hierfür in Fig. 1 und 5 Formbereiche 272, 372 für Führungsstege eines Steckers, Formbereiche 274, 374 für Ausnehmungen für Sicherheitskontaktfahnen, Formbereiche 276, 376 für Durchtrittsöffnungen von Steckerstiften, Formbereiche 278, 378 für eine Befestigungsöffnung angegeben. Auch ein Formbereich 280, 380 des jeweiligen Werkzeughalbfabrikates 250, 350 für die runde Form einer Steckereinsatzöffnung zählt im dargestellten Fall zu den Detailformbereichen für die Kavitätsdetails.

Außerdem können im abschließenden Fertigungsschritt des Werkzeugs 100 Angusskanäle 282, 382 und Anschnitte 284, 384 in das jeweilige Werkzeughalbfabrikat 250, 350 eingebracht werden.

Was die Angusskanäle 282, 382 und Anschnitte 284, 384 betrifft, so handelt es sich genau genommen im dargestellten Ausführungsbeispiel der Erfindung nur um einen einzigen Angusskanal 582 bzw. um einen einzigen Anschnitt 584, die jeweils durch die in Fig. 6 mit dem Bezugszeichen 500 bezeichnete Trennebene der Werkzeughälften 200, 300 verlaufen und anteilig aus den Angusskanälen 282, 382 und Anschnitten 284, 384 der Werkzeughälften 200, 300 gebildet sind. Dadurch, dass der Angusskanal 582 in der Trennebene 500 liegt, kann er vergleichsweise kürzer ausgeführt werden als ein Angusskanal mit anderer Lage, was sich positiv auf die Druckverhältnisse beim Einspritzen und somit auf die Zykluszeit und Teilequalität auswirkt.

Diese Lokalisierung des Angusskanals 582 ist möglich, wenn eine vertikale Bauweise der gesamten Spritzgießmaschine bzw. eine horizontale Ausrichtung der Trennebene 500 des Werkzeugs 100 in der Maschine vorgesehen wird. Eine solche Ausrichtung des Werkzeugs 100 auf den Betrieb mit einer Vertikalmaschine hat dabei auch den Vorteil, dass das Werkzeug 100 ohne Einsatz eines Kranes, nur mit einer Hand in die Maschine geschoben oder herausgezogen werden kann.

Hinsichtlich des genaueren Aufbaus der beiden Werkzeughälften 200, 300 des erfindungsgemäßen Werkzeugs 100 geht aus Fig. 1, 2 und 10 hervor, dass die erste, oberseitig angeordnete, im Besonderen bewegliche Werkzeughälfte 200 des Werkzeugs 100 eine erste Formaufspannplatte 290 umfasst, auf der unterseitig eine erste Formplatte 292 und oberseitig eine erste Wärmedämmplatte 294 befestigt ist. An der Formaufspannplatte 290 erfolgt mittels einer hydraulischen Schnellspannvorrichtung eine Verriegelung der Werkzeughälfte 200 in einer Schließeinheit der Spritzgussmaschine.

Die Formplatte 292 ist konkret das Teil der Werkzeughälfte 200, welches aus dem Werkzeughalbfabrikat 250 entsprechend dem erfindungsgemäßen Verfahren hergestellt ist, also aus dem Werkzeugrohling 260, in den im Vorfertigungsschritt die Kühlkanäle 210 in der vordefinierten Orientierung und/oder die Formbereiche 270 für die Grundkavität eingebracht wurden.

An bzw. in der ersten Formplatte 292 können sich noch weitere Bauteile befinden, wie beispielsweise die bereits erwähnten Fluidanschlüsse, Zulaufanschluss 220 und Ablaufanschluss 230, sowie Dämpfer 240 zum Abstellen der Werkzeughälfte 200 außerhalb der Spritzgussmaschine.

Was den genaueren Aufbau der komplementären zweiten, unteren, insbesondere in der Spritzgießmaschine feststehenden Werkzeug hälfte 300 des erfindungsgemäßen Werkzeugs 100 betrifft, so geht aus Fig. 5, 6 und 10 hervor, dass diese Werkzeughälfte 300 zunächst in ihrem oberen Bereich eine gleichartige Struktur wie die erste Werkzeughälfte 200 in ihrem unteren Bereich aufweist. Die untere Werkzeughälfte 300 umfasst eine zweite Formaufspannplatte 390, auf der oberseitig ein zweite Formplatte 392 und unterseitig eine zweite Wärmedämmplatte 394 befestigt ist.

Diese Formplatte 392 ist wiederum konkret das Teil der Werkzeug hälfte 300, welches aus dem Werkzeughalbfabrikat 250 entsprechend dem erfindungsgemäßen Verfahren hergestellt ist, also aus dem Werkzeugrohling 360, in den die Kühlkanäle 310 in der vordefinierten Orientierung und/oder die Formbereiche 370 für die Grundkavität eingebracht wurden.

Auch an bzw. in der zweiten Formplatte 392 können sich - wie gezeigt - wiederum noch weitere Bauteile befinden, wie die Fluidanschlüsse, Zulaufanschluss 320 und Ablaufanschluss 330, sowie die Dämpfer 340 zum Abstellen der Werkzeug hälfte 300 außerhalb der Maschine.

Der Aufbau der zweiten Werkzeughälfte 300 ist jedoch komplexer als der der ersten Werkzeughälfte 200, insofern in die zweite Werkzeughälfte 300 insbesondere eine Auswerfereinrichtung für das im Werkzeug 100 hergestellte Formteil integriert ist.

Unterhalb der zweiten Wärmedämmplatte 394 ist eine weitere Aufspannplatte befestigt, die hier als Zwischenaufspannplatte 396 bezeichnet wird. Zwischen dieser Zwischenaufspannplatte 396 und einer bodenseitigen Basisaufspannplatte 398 befinden sich zwei diametral gegenüberstehende massive Seitenwände 510, zwischen denen ein Innenraum 512 der Werkzeughälfte 300 liegt.

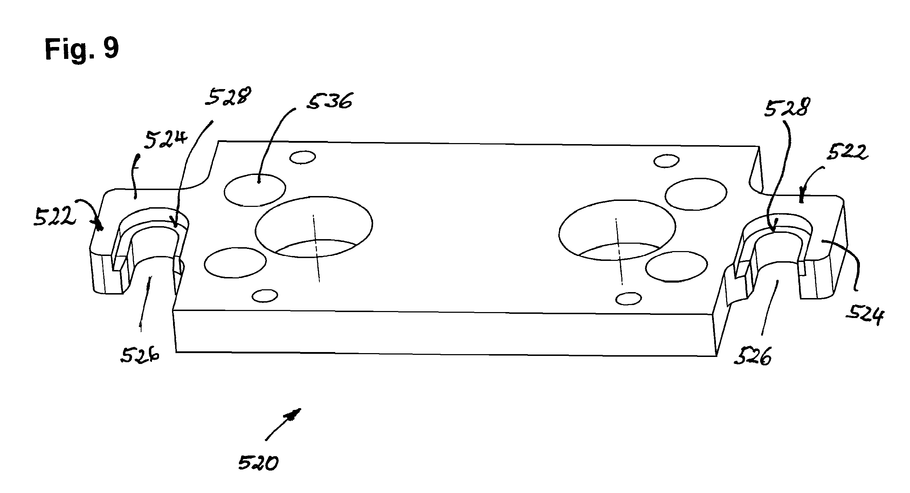

In diesem Innenraum 512 befindet sich die Auswerfereinrichtung, die eine Auswerferplatte 520 umfasst, welche in Fig. 9 als Einzelteil dargestellt ist.

Die konstruktive Besonderheit dieser Auswerferplatte 520 besteht gegenüber bekannten Auswerferplatten darin, dass die Befestigungselemente 522 - im dargestellten Fall durch Ansätze 524 mit einseitig offenen Ausnehmungen 526 gebildet, die jeweils einen inneren Auflagerand 528 für eine Schraube oder Mutter aufweisen - sich seitlich, insbesondere auf zwei einander gegenüberliegenden Schmalseiten, der Auswerferplatte 520 befinden.

Im Übrigen umfasst der Aufbau der Auswerfereinrichtung Teile, die an sich bekannt sind, wie die insbesondere durch Fig. 5 und 10 veranschaulichten Auswerferbolzen 530, die Auswerferstange 532 und die Auswerferstifte 534. Die Auswerferstifte 534 können dabei in Befestigungsöffnungen 536 der Auswerferplatte 520 (Fig. 9) eingesetzt werden, die an den zum Auswurf des jeweiligen Formteils erforderlichen Stellen in die Platte eingebracht sind.

Durch die Auswerferstange 532 kann eine Verbindung der Auswerfereinrichtung des Werkzeugs 100 zu einem beispielsweise hydraulisch arbeitenden Maschinenauswerfer hergestellt werden. Eine bekanntermaßen erforderliche Kopplung - wie durch eine Verschraubung - von Werkzeugauswerfer und Maschinenauswerfer ist in der erfindungsgemäßen Spritzgussmaschine jedoch vorteilhafterweise nicht erforderlich.

Des Weiteren ist bei der vorstehend beschriebenen erfindungsgemäßen Konstruktion des Werkzeugs 100 besonders hervorzuheben, dass sich die erwähnte Wärmedämmplatte 394 auf der Auswerferseite nicht wie bekanntermaßen üblich unter der Basisaufspannplatte 398, sondern über der Zwischenaufspannplatte 396 in einer Lage zwischen Formplatte 392 und Auswerferbereich befindet. Dadurch wird ein schneller und stabiler Wärmehaushalt - beispielsweise bei Temperaturen bis zu 140 °C - erreicht, weil der Wärmeverlust über dem Auswerferbereich entfällt. Das erfindungsgemäße Werkzeug 100 ist damit deutlich schneller betriebsbereit als bekannte Werkzeuge.

Die Erfindung ist nicht auf das beschriebene Ausführungsbeispiel beschränkt, welches in der Kombination seiner vorstehend beschriebenen Merkmale eine Reihe von Vorteilen aufweist. So hat eine Spritzgießmaschine in Vertikalbauweise, in der das Werkzeug 100 erfindungsgemäß verwendet wird, einen Stellplatzbedarf von nur noch 40 % einer gleichwertigen Standardmaschine. Die Rüst- und Anfahrzeit beträgt in Summe nur noch wenige Minuten, gemessen vom Ende der Herstellung des letzten Formteils einer Serie bis zum ersten qualitätsgerechten Formteil einer neuen Serie. Bei den bekannten Standardwerkzeugen ist stattdessen mit einer Rüst- und Anfahrzeit von 1,5 bis 2 Stunden zu rechnen. Die Zykluszeit der erfindungsgemäßen Spritzgießmaschine kann gegenüber einer Standardmaschine um mindestens 30 % reduziert werden, wobei die Formteilqualität bei Artikeln mit besonderen Anforderungen an die Oberflächenbeschaffenheit sich sichtbar verbessert. Die Zeit zur Erstellung eines erfindungsgemäßen Werkzeugs 100 beträgt etwa eine Woche, im Vergleich zu 6 bis 8 Wochen, mit denen bei einem herkömmlichen Werkzeug zu rechnen ist. Die Werkzeugkosten können um etwa 30 % gesenkt werden.

Die Erfindung umfasst auch alle im Sinne der Erfindung gleichwirkenden Ausführungen, wobei der Fachmann zusätzliche technische Maßnahmen vorsehen kann, durch die die Erfindung in zweckmäßiger Weise ausgestaltet wird. Beispielsweise wurde bereits erwähnt, dass das erfindungsgemäße Werkzeug 100 beim Einsetzen in die Spritzgussmaschine vorteilhafterweise ohne Kran gehandhabt werden kann. Zu diesem Zweck ist beispielsweise an einer Seitenwand 510 ein Handgriff 540 angebracht, um das Werkzeug 100 in die Maschine zu schieben oder wieder herauszuziehen.

Ferner ist die Erfindung nicht auf die im Anspruch 1 und den anderen unabhängigen Ansprüchen definierten Merkmalskombinationen beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal der unabhängigen Ansprüche weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen. So wird auch der Ausführung der Auswerfereinrichtung, insbesondere der Auswerferplatte 520 und der Anordnung der Wärmedämmplatte 394 über dem Auswerferbereich erfinderische Bedeutung beigemessen.

### Bezugszeichen

- 100: Werkzeug
- 200: erste (obere) Werkzeughälfte
- 300: zweite (untere) Werkzeug hälfte
- 400: Formhohlraum zwischen 200 und 300
- 500: Trennebene zwischen 200 und 300

- 210: Kühlkanal in 200, 250
- 220: Zulaufanschluss für 210
- 222: Zulaufbereich von 210
- 230: Ablaufanschluss für 210
- 232: Ablaufbereich von 210
- 240: Dämpfer an 200
- 250: Werkzeughalbfabrikat für 200
- 260: Rohling für 250
- 270: Formbereich von 250 (Grundform)
- 272: Detailformbereich von 250
- 274: Detailformbereich von 250
- 276: Detailformbereich von 250
- 278: Detailformbereich von 250
- 280: Detailformbereich von 250
- 282: Angusskanal in 250 (Teil von 582)
- 284: Anschnitt in 250 (Teil von 584)
- 290: Formaufspannplatte von 200
- 292: Formplatte von 200
- 294: Wärmedämmplattte von 200
- 310: Kühlkanal in 300, 350
- 320: Zulaufanschluss für 310
- 322: Zulaufbereich von 310
- 330: Ablaufanschluss für 310
- 332: Ablaufbereich von 310

- 340: Dämpfer an 300
- 350: Werkzeughalbfabrikat für 300
- 360: Rohling für 350
- 370: Formbereich von 350 (Grundform)
- 372: Detailformbereich von 350
- 374: Detailformbereich von 350
- 376: Detailformbereich von 350
- 378: Detailformbereich von 350
- 380: Detailformbereich von 350
- 382: Angusskanal in 350 (Teil von 582)
- 384: Anschnitt in 350 (Teil von 584)
- 390: Formaufspannplatte von 300
- 392: Formplatte von 300
- 394: Wärmedämmplattte von 300
- 396: Zwischenaufspannplatte von 300
- 398: Basisaufspannplatte von 300
- 510: Seitenwand von 300
- 512: Innenraum in 300
- 520: Auswerferplatte
- 522: Befestigungselement von 520
- 524: Ansatz an 520
- 526: Ausnehmung in 524
- 528: Auflagerand in 526
- 530: Auswerferbolzen
- 532: Auswerferstange
- 534: Auswerferstift
- 540: Handgriff an 510

## Patentansprüche

1. Verfahren zur Herstellung eines Werkzeugs (100) für eine Spritzgießmaschine zur Fertigung von vorzugsweise aus thermoplastischem Kunststoff bestehenden Formteilen, wobei das Werkzeug (100) zwei zueinander komplementäre, relativ zueinander bewegliche Werkzeughälften (200, 300) aufweist, in denen in mindestens einem Formhohlraum (400) jeweils das Formteil ausgebildet wird, wobei eine Temperierung des Formteils mittels eines Fluids erfolgt, welches in den Werkzeughälften (200, 300) verlaufende Kanäle (210, 310) durchströmt,
**dadurch gekennzeichnet, dass** zur Fertigung der Werkzeughälften (200, 300) jeweils ein Werkzeughalbfabrikat (250, 350) eingesetzt wird, welches aus einem Werkzeugrohling (260, 360) besteht, in den die Kanäle (210, 310) in einer vordefinierten Orientierung entsprechend einer gemeinsamen geometrischen Grundgestalt der Formteile und/oder ein vordefinierter Formbereich (270, 370) für eine Grundkavität eingebracht werden, die einer gemeinsamen geometrischen Grundgestalt der Formteile entspricht.

2. Verfahren nach Anspruch 1,
**dadurch gekennzeichnet, dass** das Werkzeughalbfabrikat (250, 350) aus gehärtetem und gegebenenfalls angelassenem Stahl besteht.

3. Verfahren nach Anspruch 1 oder 2,
**dadurch gekennzeichnet, dass** die gemeinsame geometrische Grundgestalt der Formteile durch Methoden des Computer Aided Design (CAD) ermittelt wird.

4. Verfahren nach einem der Ansprüche 1 bis 3,
**dadurch gekennzeichnet, dass** der Aufbau des Werkzeughalbfabrikates (250, 350) in einem CAD-System, beispielsweise in einem Speichermedium eines Computers, hinterlegt wird.

5. Verfahren nach einem der Ansprüche 1 bis 4,
**dadurch gekennzeichnet, dass** in einem abschließenden Fertigungsschritt Detailformbereiche (272, 372, 274, 374, 276, 376, 278, 378, 280, 380) für Kavitätsdetails, die verschiedenartigen Gestaltsabwandlungen der gemeinsamen geometrischen Grundgestalt der Formteile entsprechen, in das Werkzeughalbfabrikat (250, 350) sowie Angusskanäle (282, 382) und Anschnitte (284, 384) eingebracht werden.

6. Verfahren nach den Ansprüchen 4 und 5,
**dadurch gekennzeichnet, dass** der hinterlegte Aufbau des Werkzeughalbfabrikates (250, 350) entsprechend den Kavitätsdetails in ihrer Modifikation gegenüber der Grundgestalt durch Methoden des Computer Aided Design (CAD) aufbereitet und die so gewonnenen Daten für eine direkte Steuerung der Bearbeitungsmaschinen zur Herstellung der Detailformbereiche (272, 372, 274, 374, 276, 376, 278, 378, 280, 380) verwendet werden.

7. Verfahren nach Anspruch 5 oder 6,
**dadurch gekennzeichnet, dass** die Detailformbereiche (272, 372, 274, 374, 276, 376, 278, 378, 280, 380) zur Ausbildung von Stegen, Nasen, Abrundungen, Abplattungen, Nuten, Ausnehmungen oder dergleichen als Gestaltsabwandlungen der gemeinsamen geometrischen Grundgestalt der Formteile dienen.

8. Verfahren nach einem der Ansprüche 1 bis 7,
**dadurch gekennzeichnet, dass** aus dem Werkzeughalbfabrikat (250, 350) eine Formplatte (292, 392) des Werkzeugs (100) hergestellt wird.

9. Werkzeughalbfabrikat (250, 350) eines Verfahrens nach einem der Ansprüche 1 bis 8, bestehend aus einem Werkzeugrohling (260, 360), in den die Kühlkanäle (210, 310) in einer vordefinierten Orientierung entsprechend der gemeinsamen geometrischen Grundgestalt der Formteile und/oder ein Formbereich (270, 370) für eine Grundkavität eingebracht sind/ist, der der gemeinsamen geometrischen Grundgestalt der Formteile entspricht.

10. Werkzeughalbfabrikat (250, 350) nach Anspruch 9,
**dadurch gekennzeichnet, dass** der Werkzeugrohling (260, 360) aus gehärtetem und gegebenenfalls angelassenem Stahl besteht.

11. Werkzeug (100) für eine Spritzgießmaschine zur Fertigung von insbesondere aus thermoplastischem Kunststoff bestehenden Formteilen, mit zwei zueinander komplementären relativ zueinander beweglichen Werkzeughälften (200, 300), die mindestens einen Formhohlraum (400) für ein Formteil ausbilden und von Kanälen (210, 310) zur Führung eines Fluids zur Temperierung des Formteils durchsetzt sind,
**gekennzeichnet durch** eine Fertigung mittels eines Verfahrens nach einem der Ansprüche 1 bis 8 aus einem Halbfabrikat (250, 350) nach Anspruch 9 oder 10.

12. Werkzeug (100) nach Anspruch 11,
**dadurch gekennzeichnet, dass** in jeder Werkzeughälfte (200, 300) ein Angusskanal (282, 382) und ein Anschnitt (284, 384) ausgebildet sind, die jeweils gemeinsam einen einzigen Angusskanal (582) und einen einzigen Anschnitt (584) bilden, welche jeweils in einer Trennebene (500) zwischen den Werkzeughälften (200, 300) verlaufen.

13. Werkzeug (100) nach Anspruch 11 oder 12,
**dadurch gekennzeichnet, dass** jede Werkzeughälfte (200, 300) eine Formaufspannplatte (290, 390) umfasst, auf der auf einer Seite eine Formplatte (292, 392) und auf der anderen Seite eine Wärmedämmplatte (294, 394) befestigt ist.

14. Werkzeug (100) nach Anspruch 13,
**dadurch gekennzeichnet, dass** ausschließlich die Formplatte (292, 392) aus dem Halbfabrikat (250, 350) hergestellt ist.

15. Werkzeug (100) nach Anspruch 13 oder 14,
**dadurch gekennzeichnet, dass** an der Formplatte (292, 392) Bauteile, wie ein Zulaufanschluss (220, 320), ein Ablaufanschluss (230, 330) oder Dämpfer (240, 340) zum Abstellen der Werkzeughälfte (200, 300) befestigt sind.

16. Werkzeug (100) nach einem der Ansprüche 11 bis 15,
**dadurch gekennzeichnet, dass** in eine Werkzeughälfte (300) eine Auswerfereinrichtung (520, 530, 532) für das Formteil integriert ist.

17. Werkzeug (100) nach Anspruch 16,
**dadurch gekennzeichnet, dass** sich die Auswerfereinrichtung (520, 530, 532) im Wesentlichen in einem durch eine bodenseitige Basisaufspannplatte (398), eine oberseitige Zwischenaufspannplatte (396) und zwei sich diametral gegenüberstehende Seitenwände (510) gebildeten Innenraum (512) der Werkzeug hälfte (300) befindet.

18. Werkzeug (100) nach Anspruch 16 oder 17,
**dadurch gekennzeichnet, dass** die Auswerfereinrichtung (520, 530, 532) eine Auswerferplatte (520) umfasst, die Befestigungselemente (522) aufweist, die sich seitlich, insbesondere auf zwei einander gegenüberliegenden Schmalseiten, der Auswerferplatte (520) befinden.

19. Werkzeug (100) nach Anspruch 13 und einem der Ansprüche 16 bis 18,
**dadurch gekennzeichnet, dass** die Wärmedämmplatte (394) in einem Bereich zwischen der Formplatte (392) und der Auswerfereinrichtung angeordnet ist.

20. Verwendung eines Werkzeugs (100) in einer Spritzgießmaschine zur Herstellung eines insbesondere aus thermoplastischem Kunststoff bestehenden Formteils, mit einer Spritz- und Plastifiziereinheit, einer Schließeinheit, einer Steuerung und mit einem Werkzeug (100), welches zwei relativ durch die Schließeinheit zueinander bewegliche Werkzeughälften (200, 300) aufweist, in denen in mindestens einem Formhohlraum (400) das Formteil ausgebildet wird, wobei eine Temperierung des Formteils mittels eines Fluids erfolgt, welches in den Werkzeughälften (200, 300) verlaufende Kanäle (210, 310) durchströmt,
**gekennzeichnet durch** ein Werkzeug (100) nach einem der Ansprüche 11 bis 19.

21. Verwendung nach Anspruch 20,
**dadurch gekennzeichnet, dass** bei der Herstellung des Formteils eine Trennebene (500) zwischen den beiden relativ zueinander beweglichen Werkzeughälften (200, 300) horizontal ausgerichtet ist.

22. Verwendung nach Anspruch 20 oder 21,
**dadurch gekennzeichnet, dass** bei der Herstellung des Formteils eine untere Werkzeughälfte (300) des Werkzeugs (100) ortsfest und eine obere Werkzeughälfte (200) des Werkzeugs (100) beweglich in der Schließeinheit angeordnet ist.

23. Verwendung nach einem der Ansprüche 20 bis 22,
**dadurch gekennzeichnet, dass** zur Herstellung des Formteils die Werkzeughälften (200, 300) mittels einer hydraulischen Schnellspannvorrichtung in der Schließeinheit befestigt werden.
